# EUROPÄISCHE PATENTSCHRIFT

(11) **EP 2 665 955 B1**
(45) Veröffentlichungstag und Bekanntmachung des Hinweises auf die Patenterteilung: **22.04.2015**
(21) Anmeldenummer: 12708709.6
(22) Anmeldetag: 18.01.2012
(51) Int. Cl.: F16K 47/00, F16K 31/06

(54) **SCHIEBERVENTIL**
SLIDE VALVE
DISTRIBUTEUR À TIROIR

(30) Priorität: 18.01.2011 DE 202011001671 U
(43) Veröffentlichungstag der Anmeldung: 27.11.2013
(73) Patentinhaber: Eto Magnetic GmbH, 78333 Stockach (DE)
(72) Erfinder: BÜRßNER, Jörg, 78234 Engen (DE); VINCON, Peter, 78333 Stockach (DE)
(74) Vertreter: Behrmann, Niels
(86) Internationale Anmeldenummer: PCT/EP2012/050702
(87) Internationale Veröffentlichungsnummer: WO 2012/098155

(56) Entgegenhaltungen:
- EP-A2- 1 519 256
- WO-A1-2007/135704
- DE-A1- 19 607 773
- DE-A1- 19 907 348
- GB-A- 778 884

## Beschreibung

Die vorliegende Erfindung betrifft ein Schieberventil nach dem Oberbegriff des Hauptanspruchs, wie es aus der EP 1 519 256 A2 bekannt ist. Eine derartige Vorrichtung ist für verschiedenste Anwendungsbereiche, etwa als Hochdruck-Hydraulikventil im Kfz- bzw. Lkw-Umfeld benutzbar und basiert auf dem Prinzip, dass ein als Ventilschieber dienender, axial in einem langgestreckten Ventilgehäuse (durch Wirkung eines Magnetankers) betriebener Stößel, abhängig von einer Axialposition, einen Fluidfluss zwischen einem Einlass und einem (axial davon beabstandeten) Auslass selektiv öffnet bzw. schließt.

Typischerweise wirkt zu diesem Zweck die Stößeleinheit zusammen mit einer Ankereinheit, welche durch Bestromung einer (stationären) Spuleneinheit in axialer Richtung bewegt wird und die Stößeleinheit auf diese Weise antreibt; gegen die Wirkung einer Druckfeder als Kraftspeicher wird dann die Stößeleinheit in eine Ausgangsposition zurückgeführt.

Bei aus dem Stand der Technik bekannten Vorrichtungen ist es dabei wichtig, das Zusammenwirken zwischen Stößel, Druckfeder, (realisierbarer) Stellkraft der Magneteinheit und Ventilgeometrie sorgfältig aufeinander auszurichten, insbesondere wenn die als gattungsgemäß bekannt vorausgesetzte Vorrichtung im Regelbetrieb betrieben werden soll, d.h. im Bereich derjenigen axialen Stößelposition, bei welcher der Fluidfluss (graduell) geöffnet wird. In der praktischen Realisierbarkeit führt dies dann dazu, dass typischerweise ein (Gesamt-) Federhub der verwendeten Druckfeder nicht sehr lang sein kann, da, etwa für den beschriebenen Regelbetrieb, eine vergleichsweise hohe Federkraft benötigt wird. Damit ist derjenige Stößelhub, um welchen der Stößel in einem Verschlusszustand des Ventils (also bei unterbrochenem Fluidfluss) bewegt werden kann, begrenzt, bis der für den Regelbetrieb relevante Bereich erreicht wird. Dies hat dann zur Folge, dass durch Wirkung der Stößeleinheit (welche typischerweise den Fluidfluss zwischen Ein- und Auslass mittels einer mantelseitigen Einfräsung am Stößelmantel ermöglicht) nicht vollständig aus einem Überdeckungsbereich mit dem Ein- und Auslass bewegt werden kann, so dass mögliche Undichtigkeiten bzw. Leckagen die Folge sind.

Zum weiteren Stand der Technik wird verwiesen auf die GB 778 884 A, die WO 2007/135704 A1, die DE 199 07 348 A1 sowie die DE 196 07 773 A1.

Aufgabe der vorliegenden Erfindung ist es daher, ein gattungsgemäßes Schieberventil im Hinblick auf seine Betriebs- und Dichtungseigenschaften zu verbessern, insbesondere die Voraussetzungen dafür zu schaffen, dass einerseits, in der Verschlussposition der Stößeleinheit, eine Verringerung einer Leckage zwischen Einund Auslass des Ventilgehäuses bewirkt wird, andererseits in der Öffnungsposition der Stößeleinheit nicht nur ein zuverlässiger Fluidfluss zwischen Ein- und Auslass ermöglicht werden kann, sondern auch, bei ausreichender (Gegen-) Federkraft, ein ordnungsgemäßer Regelbetrieb ermöglicht ist.

Die Aufgabe wird durch das Schieberventil mit den Merkmalen des Hauptanspruchs gelöst, vorteilhafte Weiterbildungen der Erfindung sind in den Unteransprüchen beschrieben.

In erfindungsgemäß vorteilhafter Weise ist der erfindungsgemäße Kraftspeicher in Form von zwei axial miteinander wirkenden (bevorzugt: axial miteinander gekoppelten bzw. axial aneinander anstoßenden) Druckfederabschnitten realisiert, die eine unterschiedliche Federkraft (entsprechend typischerweise eine unterschiedliche Federsteifigkeit) aufweisen. Dabei ist dann die Geometrie der Vorrichtung, insbesondere eine Stößellänge, die Geometrie des Ventilgehäuses, der beiden Druckfederabschnitte und der Ein- und Auslasspositionen so gewählt, dass bei einer Stößelbewegung zum Öffnen des Ventils, d.h. von der Verschlussposition in die Öffnungsposition, lediglich ein erster (weicherer bzw. eine geringere Federkraft aufweisender) Druckfederabschnitt signifikant komprimiert wird, während der zweite, härtere (bzw. eine größere Federkraft aufweisende) Druckfederabschnitt weitgehend unkomprimiert bleibt. Dies ermöglicht dann, dass die Stößeleinheit vor dem Erreichen der Öffnungsposition einen relativ langen Stößelhub, gegen die Federkraft des ersten Druckfederabschnitts, bewegt werden kann, mit der vorteilhaften Wirkung, dass entsprechend dieser nutzbaren Länge eine ordnungsgemäße und vorteilhafte Dichtung der Vorrichtung gegen unerwünschte Leckage möglich ist. Sobald dann der erste Druckfederabschnitt (vollständig) komprimiert ist, erfolgt die Arbeit der Ankereinheit gegen den zweiten Druckfederabschnitt, wobei geometrisch dies im Bereich des Regelbetriebs erfolgt, d.h. eine gegen die Federkraft des zweiten Druckfederabschnitts wirkende graduelle Öffnung des Fluidkanals ermöglicht ist.

Vorteilhaft gestattet es damit die vorliegende Erfindung, durch geeignete Ausgestaltung des ersten und des zweiten Druckfederabschnitts (wobei gemäß einer bevorzugten Ausführungsform der Erfindung, jeder Druckfederabschnitt als gesonderte Druckfeder realisiert wird, welche im einfachsten Fall axial aneinander gesetzt sind), die Gesamtanordnung der Federn so auszubilden, dass die jeweiligen Abschnitte die ihnen zugewiesenen Aufgaben bestmöglich erfüllen, der erste Federabschnitt mit vergleichsweise geringer Federkraft über einen langen Federweg (bzw. Kompressionshub), der zweite Federabschnitt bei größerer Federkraft über einen geringeren Federhub. Im Rahmen der Erfindung ist es dabei bevorzugt, das Verhältnis der (etwa entspannten, unkomprimierten) Druckfedern für den ersten und den zweiten Druckfederabschnitt so auszugestalten, dass die entspannte Länge des ersten Druckfederabschnitts das mindestens zweifache der entspannten Länge des zweiten Druckfederabschnitts, bevorzugt das mindestens dreifache dieser Länge, beträgt.

Im Rahmen der Erfindung liegt es dabei, die (entspannte) Länge des ersten Federabschnitts (bzw. einer korrespondierenden Druckfeder) so auszugestalten, dass diese länger ist als der axiale Abstand (Versatz) zwischen Ein- und Auslass, mit der vorteilhaften Wirkung, dass gegen die Federkraft dieses ersten Druckfederabschnitts die Stößeleinheit aus einem zuverlässigen Dichtigkeitsbereich bewegt werden kann.

Eine besonders bevorzugte Weiterbildung der Erfindung sieht vor, die komprimierte Länge des ersten Druckfederabschnitts (bzw. einer korrespondierenden ersten Druckfeder) dadurch einzustellen bzw. vorzugeben, dass diese Druckfeder einends in ein offenes hülsenförmiges Ende des Stößels eingreift, anderenends in ein schlittenartiges Hülsenelement, welches axial beweglich im Ventilgehäuse geführt ist. Wird dann durch axiale Stößelbewegung diese Anordnung komprimiert, sitzt im hubbegrenzten Kompressionszustand ein Außenrand des (hülsenförmigen) Stößel-Endabschnitts auf, einem korrespondierenden Hülsenrand der Schlitten- bzw. Hülseneinheit und nimmt diese insoweit mit. Vermieden wird damit, dass die erste Druckfeder über ein vorbestimmtes minimales Erstreckungsmaß hinaus komprimiert wird.

Insbesondere in dieser vorteilhaften Weiterbildung der Erfindung ist dann die Hülsen- bzw. Schlitteneinheit über die zweite, wiederum als Druckfeder realisierte Federeinheit gegenüber einem Fixpunkt, etwa gegenüber dem Ventilgehäuse, axial abgestützt, so dass auch insoweit die sequentielle, axiale Verkoppelung der beiden Federn (über die Hubbegrenzung der Hülsenabschnitte) realisiert werden kann.

Der magnetische Antrieb der Ankereinheit ist prinzipiell auf beliebige, ansonsten bekannte Weisen möglich. Als besonders bevorzugt hat es sich jedoch erwiesen, das Ventilgehäuse sich axial erstreckend so auszubilden, dass es sich bis in einen Hubbereich der (die Stößeleinheit antreibenden) Ankereinheit erstreckt, wobei weiter bevorzugt und vorteilhaft dann das Ventilgehäuse, in der Art eines magnetischen Joch- bzw. Kernabschnitts, mit geeignet flussleitenden Elementen bzw. Abschnitten versehen sein kann, um in der gewünschten Weise die Ankerkraft entlang des Ankerhubels zu beeinflussen. Weiterbildungsgemäß vorteilhaft hat es sich als günstig herausgestellt, hier etwa den Endbereich des Ventilgehäuses mittels einer konusförmig zulaufenden Profilierung zu versehen, um insoweit die Magnetkraft an die beschriebenen Verhältnisse der zweigeteilten Federeinheit anzupassen.

Im Ergebnis ermöglicht es die vorliegende Erfindung in konstruktiv einfacher und funktionell günstiger Weise, den Hub der als Ventilschieber dienenden Stößeleinheit in zwei Bereiche zu unterteilen; dabei legt im ersten, durch den ersten Druckfederabschnitt unterstützten Bereich der Ventilschieber einen langen Hub zurück, ermöglicht dabei eine zuverlässige Dichtung der Ausgangsposition ausserhalb jeglicher Überdeckung mit Ein- und Auslass, während im zweiten Teilbereich der Stößelbewegung, insbesondere zum Zweck der Fluidregelung, die Stößeleinheit gegen eine zweite stärkere Feder (bei geringerem Hub) wirkt.

Im Ergebnis überwindet damit die vorliegende Erfindung die als aus dem Stand der Technik vorauszusetzende, doppelt nachteilige Kompromisslösung und kombiniert vorteilhafte Dichtigkeits- und Leckageeigenschaften mit herausragenden Fluidregeleigenschaften im Eingriff.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine Längsschnittansicht des Schieberventils, mit seiner ersten, bevorzugten Ausführungsform der Erfindung und
- Fig. 2-4: eine vereinfachte Darstellung der Vorrichtung gemäß Fig. 1 in drei aufeinanderfolgenden Stößel- bzw. Ventilschieberpositionen zum Verdeutlichen des Ventilbetriebes.

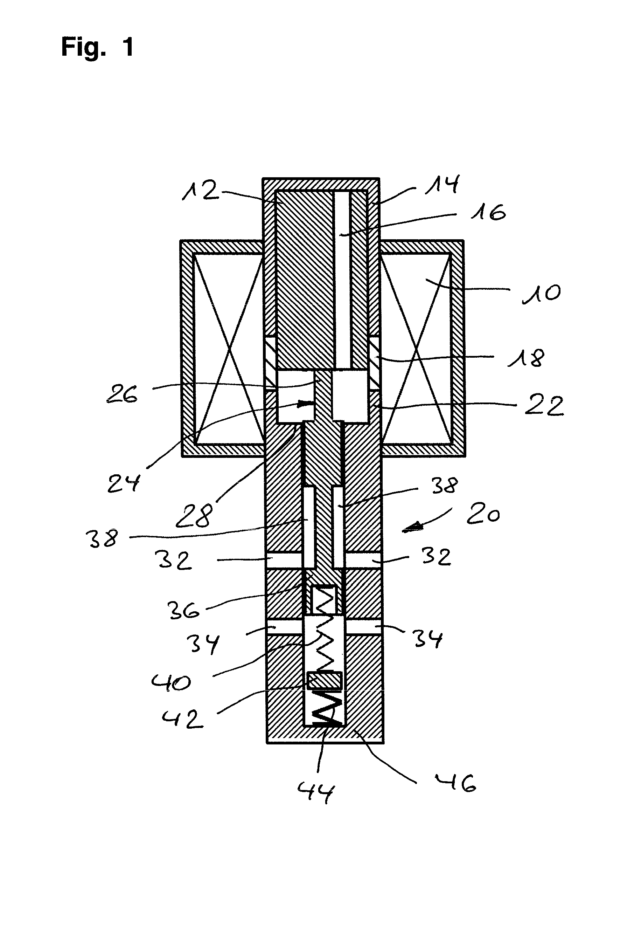

Die Fig. 1 verdeutlicht in der Längsschnittansicht ein Schieberventil gemäß einer ersten bevorzugten Ausführungsform der vorliegenden Erfindung. Das Schieberventil gemäß Fig. 1 weist in ansonsten bekannter Weise eine elektromagnetische Stelleinheit auf, welche eine in einem Spulenträger gehaltene stationäre Spuleneinheit 10 aufweist, welche (in nicht näher gezeigter Weise) mit einer Bestromung zum axialen Antreiben eines Ankerkörpers 12 in einer (in der Fig. 1 vertikalen) axialen Richtung vorsieht. Der schematisch und zylindrisch gezeigte Ankerkörper 12 bewegt sich in einem Gehäuseabschnitt 14 und weist einen zum Zweck des Druckausgleichs als Längsbohrung 16 ausgebildeten Durchbruch auf.

Über einen magnetisch nicht leitenden Übergangsabschnitt 18 schließt sich an den Gehäuseabschnitt 14 ein Ventilgehäuse 20 an, welches im Bereich des Ankerhubs becherförmig ausgebildet ist und diesen Bereich mit einem Flussleitabschnitt 22 umschließt.

Wie sich ferner aus der Fig. 1 ergibt, wirkt der Ankerkörper 12 zusammen mit einer Stößeleinheit 24, welche axial langerstreckend ausgebildet ist, auf eine plane Stirnfläche des Ankerkörpers 12 greift und in einer Mittelbohrung des sich wiederum axial langerstreckend ausgebildeten Ventilgehäuses 20 geführt ist. Genauer gesagt weist die Stößeleinheit 24 einen im Durchmesser verjüngten oberen Eingriffabschnitt 26 zum Zusammenwirken mit dem Ankerkörper 12 auf, wobei der Eingriffabschnitt 26 sich im Bereich des Ventilkörpers (Ventilgehäuses) 20 gegen einen, einen oberen Anschlag bildenden Gehäuseabsatz 28 aufweitet.

Im weiteren axialen Verlauf liegt die Stößeleinheit mantelseitig an einer zylindrischen Innenfläche einer die Stößeleinheit 24 führenden Längsbohrung des Ventilgehäuses 20 an. Dieses weist, axial gegeneinander versetzt, eine Mehrzahl von sich radial erstreckenden Einlassbohrungen 32 bzw. Auslassbohrungen 34 auf, wobei in der gezeigten oberen Anschlagsposition der Stößeleinheit 24 ein möglicher Fluidfluss zwischen Einlass 32 und Auslass 34 dadurch unterbrochen ist, dass ein Endabschnitt 36 der Stößeleinheit 24 jeglichen Fluidfluss unterbindet.

Um, zur Realisierung der Ventilschieber-Funktionalität, in einem Öffnungszustand einen Fluidfluss zwischen Einlass 32 und Auslass 34 zu ermöglichen, weist die Stößeleinheit 24 mantelseitig eine eingeformte Vertiefung 38 auf, welche sich axial um eine Länge erstreckt, welche dem Abstand zwischen Einlass 32 und Auslass 34 entspricht. Mit anderen Worten, in einem entsprechenden Verschiebe (Öffnungs-) Zustand der Stößeleinheit 24 stehen sowohl der Einlass 32, als auch der Auslass 34 in Verbindung mit der Vertiefung 38, so dass dann ein Fluidfluss ermöglicht ist.

Wie die Fig. 1 ferner verdeutlicht, ist der Endabschnitt 36 endseitig hohlzylindrisch bzw. hülsenartig aufgeweitet, um einen Aufnahmeraum für eine erste (obere) Druckfeder (Spiralfeder) 40 anzubieten. Diese Spiralfeder 40 weist im gezeigten entspannten Zustand eine axiale Längserstreckung auf, welche größer ist als der axiale Abstand (Versatz) zwischen Ein- 32 und Auslass 34.

Dagegen ist diese erste Druckfeder 40, welche eine Federkraft von typischerweise < 2N (bei einer mit typischem Federdurchmesser von 3mm und einer entspannten Federlänge von 20mm) aufweist, aufgenommen in einer hohlzylindrischen bzw. hülsenartigen Einformung eines Schlitten- bzw. Geleitelements 42, welches axial verschiebbar in der axialen Längsbohrung des Ventilgehäuses 20 ausgebildet ist und selbst wiederum bodenseitig von einer zweiten Druckfeder (Spiralfeder) 44 gegen einen Gehäuseboden 46 abgestützt ist.

Auf diese gezeigte Weise, mit dem zwischenliegenden Schlittenelement 42, ist damit die Stößeleinheit 24 axial zweistufig (nämlich durch eine Abfolge, Aneinanderreihung bzw. axiale Kopplung) der Druckfedern 40, 44 gegen den Ankerkörper 12 (bzw. in die gezeigte obere Anschlagposition des Ankerkörpers 12) vorgespannt.

Während mit der exemplarisch vorgesehen Federkraft von < 2N die erste Druckfeder 40, bei relativ langem Federhub, weich ist, weist die zweite Druckfeder 44, bei einem typischen Federdurchmesser von 4mm und einer entspannten Federlänge von 7mm eine Federkraft von 0 bis 20N, hier ca. 15N, auf, ist also gegenüber der ersten Druckfeder 40 signifikant härter bei geringerem Federhub. Im Rahmen der vorliegenden Erfindung wird dies vorteilhaft zu dem Zweck ausgenutzt, bei einem aus der Position der Fig. 1 abwärts gerichteten Bewegungsbetrieb der Stößeleinheit 24 zunächst die erste Druckfeder 40 zu komprimieren (wobei die aufeinander gerichteten offenen Enden des Stößels 24 mit dem Endbereich 36 bzw. des Schlittens 42 eine Kompressions- bzw. Hubbegrenzung ermöglichen und damit vorgeben, wie weit die Druckfeder 40 maximal komprimiert werden kann). Aufgrund der geringeren Federsteifigkeit erfolgt dann eine Kompression der zweiten Druckfeder 44 bei weiterer Abwärtsbewegung der Ankereinheit 12 bzw. der davon angetriebenen Stößeleinheit 24 erst, sobald die erste Druckfeder 40 den beschriebenen maximalen Kompressionszustand bzw. die daraus resultierende minimale Kompressionslänge erreicht hat. In dieser Vorschubposition befindet sich dann die Ausnehmung 38 am Stößel 24 im Bereich der Öffnungsposition, d.h. es erfolgt eine (graduelle) Freigabe eines Fluidflusses zwischen Einlass 32 und Auslass 34, mithin zum Ermöglichen des so genannten Regelbetriebs für den Fluidfluss, gegen die Rückstellkraft der zweiten unteren Druckfeder 44.

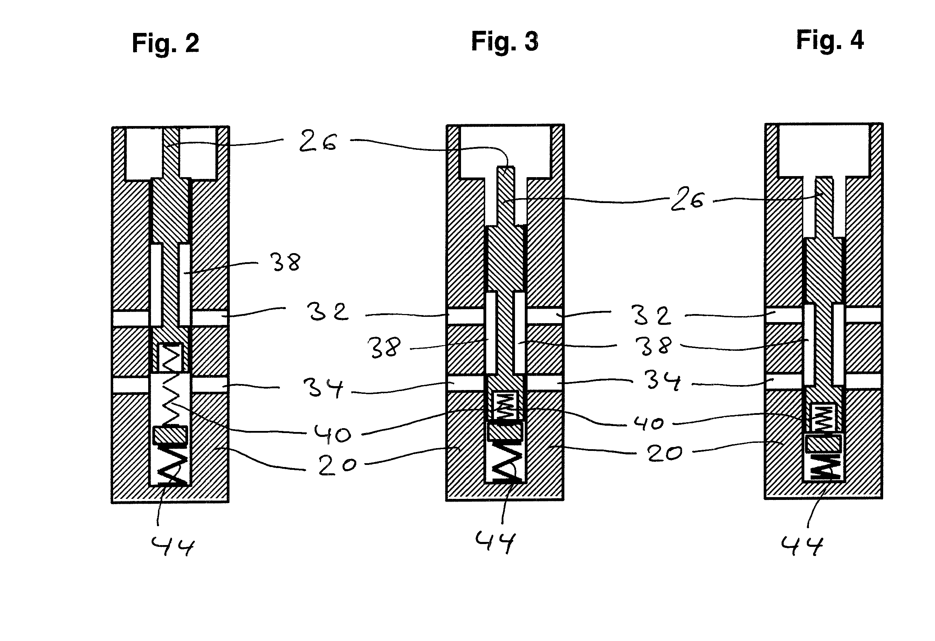

Die Abfolge der Fig. 2 bis 4 verdeutlicht diesen Vorgang: Es zeigt sich, dass in der Fig. 2, insoweit entsprechend der Stellposition der Fig. 1, ein Fluidfluss zwischen Einlass 32 und Auslass 34 wirksam unterbrochen ist. Damit ist ein unbeabsichtigter, parasitärer Fluidfluss unterbunden und damit eine vorteilhafte und günstige Dichtwirkung der Vorrichtung erreicht.

Die Fig. 3 verdeutlicht den Beginn des Regelbereichs, d.h. eine axiale Stellposition der Stößeleinheit 24, bei welcher die obere Feder 40 bereits ihren maximalen Kompressionszustand erreicht hat und insoweit das vordere Eingriffsende 36 der Stößeleinheit 24 unmittelbar auf die Schlitteneinheit 42 greift und diese axial abwärts mitnimmt. In dieser Position wirkt daher primär die Gegenkraft der zweiten Druckfeder 44 (in Addition zur -deutlich schwächeren- Druckfederkraft der ersten Feder 40 in der gezeigten Kompressionsposition). Der Regelbereich erstreckt sich axial bis zur vollständigen Öffnungsposition der Fig. 3. Durch geeignete Ansteuerung der Spuleneinheit 10 lässt sich entsprechend der gewünschte präzise Regelbetrieb, primär bestimmt durch die zweite Druckfeder 44, realisieren, während gleichzeitig, wie vorstehend dargelegt, für den für die Dichtigkeit wichtigen Vorschubbetrieb und langen Hub der Stößeleinheit 24 ausserhalb des Regelbereichs ausschließlich die weichere (und im Hub längere) erste Druckfeder 40 maßgeblich ist.

Insoweit lässt sich vorteilhaft jeder Stellbereich optimieren, wobei weiter vorteilhaft weder erhöhte Leistungsanforderungen (etwa im Hinblick auf die Magnetkraft) an die Stelleinheit gestellt werden müssen (etwa um, wie als aus dem Stand der Technik bekannt vorausgesetzt, eine einzelne lange Feder mit hoher Federkraft über den gesamten Hubbereich anzutreiben), noch müssen nachteilige kurze Hubwege im Verschlusszustand in Kauf genommen werden, welche sich wiederum, in der eingangs als nachteilig zum Stand diskutierten Weise, negativ auf das Dichtigkeitsverhalten auswirken.

## Patentansprüche

1. Schieberventil mit einer langgestreckt als Ventilschieber ausgebildeten und in einem mindestens einen Ventileinlass (32) und mindestens einen axial dazu versetzt vorgesehenen Ventilauslass (34) aufweisenden Ventilgehäuse (20) geführten Stößeleinheit (24), die mit einer als Reaktion auf eine Bestromung einer stationären Spuleneinheit (10) bewegbaren Ankereinheit so zusammenwirkt, dass die Stößeleinheit in einer axialen Richtung und gegen die Rückstellkraft eines Kraftspeichers (40, 44) zwischen einer Öffnungsposition, bei welcher die Stößeleinheit einen Fluidfluss zwischen dem Ventileinlass und dem Ventilauslass freigibt, und einer Verschlussposition, bei der der Fluidfluss unterbrochen ist, verstellt wird, wobei
der Kraftspeicher zwei miteinander axial gekoppelte Druckfederabschnitte (40, 44) mit einer ersten bzw. einer zweiten Federkraft aufweist, die so ausgebildet sind, dass ein erster Federabschnitt (40) mit der relativ zur zweiten Federkraft kleineren ersten Federkraft durch die sich axial von der Verschlussposition zur Öffnungsposition bewegenden Stößeleinheit (24) komprimiert wird, wobei der zweite Federabschnitt (44) bei komprimiertem ersten Federabschnitt erst komprimiert wird, wenn beim Erreichen der Öffnungsposition der Fluidfluss freigegeben wird, und
die Druckfederabschnitte die Stößeleinheit axial zweistufig gegen die Ankereinheit vorspannen,
**dadurch gekennzeichnet, dass**
eine axiale Erstreckung einer den ersten Federabschnitt realisierenden ersten Druckfeder in einem entspannten Zustand länger ist als eine axiale Erstreckung einer den zweiten Federabschnitt realisierendem gesonderten zweiten Druckfeder in expandiertem Zustand.

2. Schieberventil nach Anspruch 1,
**dadurch gekennzeichnet,**
**dass** der erste und der zweite Druckfederabschnitt als axial stirnseitig an die Stößeleinheit angreifende Abfolge- und/oder Schichtung von Druckfedern (40, 44) realisiert sind.

3. Schieberventil nach Anspruch 1 oder 2,
**dadurch gekennzeichnet,**
**dass** ein Feder- und/oder Kompressionshub des ersten Federabschnitts, insbesondere einer den ersten Federabschnitt realisierenden Druckfeder, so bemessen ist, dass er länger als der axiale Versatz zwischen dem Ventileinlass und dem Ventilauslass ist.

4. Schieberventil nach einem der Ansprüche 1 bis 3,
**dadurch gekennzeichnet,**
**dass** eine Federkraft und/oder ein Kompressionshub des zweiten Federabschnitts, insbesondere einer den zweiten Federabschnitt realisierenden Druckfeder, so eingerichtet ist, dass bei dem Erreichen der Öffnungsposition ein stufenloser Regelbetrieb des Fluidflusses erfolgen kann.

5. Schieberventil nach einem der Ansprüche 1 bis 4,
**dadurch gekennzeichnet,**
**dass** ein stößelseitiges Ende des ersten oder des zweiten Druckfederabschnitts in einem hülsenartig ausgeformten Endabschnitt der Stößeleinheit (24) aufgenommen ist.

6. Schieberventil nach Anspruch 5,
**dadurch gekennzeichnet,**
**dass** eine zum Ausbilden eines Anschlags für den hülsenartig ausgeformten Endabschnitt (36) ausgebildete, axial gleitend im Ventilgehäuse geführte Schlitten- und/oder Hülseneinheit (42), zusammen mit dem Endabschnitt (36) eine Aufnahme für eine den ersten Druckfederabschnitt realisierende Druckfeder (40) ausbildet.

7. Schieberventil nach Anspruch 6,
**dadurch gekennzeichnet,**
**dass** die Schlitten- bzw. Hülseneinheit mittels einer den zweiten Druckfederabschnitt realisierenden Druckfeder (44) gegen ein Widerlager (46) am Ventilgehäuse gefedert abgestützt ist.

8. Schieberventil nach einem der Ansprüche 1 bis 7,
**dadurch gekennzeichnet,**
**dass** die Stößeleinheit mantelseitig dichtend gegen das Ventilgehäuse geführt ist und mantelseitig eine Einformung (38) aufweist, die so ausgebildet und axial bemessen ist, dass die Einformung in der Öffnungsposition das Freigeben des Fluidflusses bewirkt.

9. Schieberventil nach Anspruch 8,
**dadurch gekennzeichnet,**
**dass** eine zum Aufnehmen eines stößelseitigen Endes des ersten oder des zweiten Druckfederabschnitts ausgebildete, hülsenartige Einformung der Stößeleinheit eine axiale Tiefe aufweist, welche kleiner ist als ein Abstand der mantelseitigen Einformung zum Stößelende.

10. Schieberventil nach Anspruch 9,
**dadurch gekennzeichnet,**
**dass** eine entspannte Länge des ersten Druckfederabschnitts, insbesondere eine entspannte Länge einer dem ersten Druckfederabschnitt realisierenden Druckfeder, länger ist als eine axiale Erstreckung der mantelseitigen Einformung.

11. Schieberventil nach einem der Ansprüche 1 bis 10,
**dadurch gekennzeichnet,**
**dass** das magnetisch flussleitende Ventilgehäuse (20) sich axial bis in einen Hubbereich der Ankereinheit hineinerstreckt und, der Ankereinheit benachbart, eine konusförmig zulaufende Profilierung (22) als Flussleitabschnitt (22) ausbildet.

## Claims

1. A slide valve having a tappet unit (24), which is constructed in an elongated manner as a valve slider and guided in a valve housing (20) having at least one valve inlet (32) and at least one valve outlet (34) provided axially offset thereto, and which interacts in such a manner with an armature unit, which can be moved as a reaction to an energising of a stationary coil unit (10), that the tappet unit is displaced in an axial direction and counter to the restoring force of an energy storage unit (40, 44) between an open position, in which the tappet unit releases a fluid flow between the valve inlet and the valve outlet, and a closure position, in which the fluid flow is interrupted, wherein
the energy storage unit has two mutually axially coupled compression spring sections (40, 44) with a first and a second spring force, respectively, which are constructed in such a manner that a first spring section (40) with the first spring force, which is smaller relatively to the second spring force, is compressed by means of the tappet unit (24) moving axially from the closure position to the open position, wherein
the second spring section (44) is only compressed when the first spring section is compressed, if the fluid flow is released upon reaching the open position, and
the compression spring sections prestress the tappet unit axially with respect to the armature unit in two stages,
**characterised in that**
an axial extent of a first compression spring realising the first spring section is longer in a relaxed state than an axial extent of a separate second compression spring realising the second spring section in expanded state.

2. The slide valve according to Claim 1, **characterised in that** the first and the second compression spring section are realised as a sequence and/or layered arrangement of compression springs (40, 44) acting on the tappet unit axially at the end face.

3. The slide valve according to Claim 1 or 2, **characterised in that** a spring and/or compression travel of the first spring section, particularly a compression spring realising the first spring section, is dimensioned in such a manner that it is longer than the axial offset between the valve inlet and the valve outlet.

4. The slide valve according to one of Claims 1 to 3, **characterised in that** a spring force and/or a compression travel of the second spring section, particularly a compression spring realising the second spring section, is set up in such manner that, upon reaching the open position, a continuously variable controlled operation of the fluid flow can take place.

5. The slide valve according to one of Claims 1 to 4, **characterised in that** a tappet-side end of the first or the second compression spring section is accommodated in a sleeve-like shaped end section of the tappet unit (24).

6. The slide valve according to Claim 5, **characterised in that** a slide and/or sleeve unit (42), which is constructed for constructing a stop for the sleeve-like shaped end section (36) and is guided in an axially gliding manner in the valve housing, constructs, together with the end section (36), a receptacle for a compression spring (40) realising the first compression spring section.

7. The slide valve according to Claim 6, **characterised in that** the slide or sleeve unit is supported in a resilient manner against a counter bearing (46) on the valve housing, by means of a compression spring (44) realising the second compression spring section.

8. The slide valve according to one of Claims 1 to 7, **characterised in that** the tappet unit is guided in a sealed manner with respect to the valve housing on the cover-side and has a moulding (38), which is constructed and axially dimensioned in such a manner that the moulding effects the releasing of the fluid flow in the open position.

9. The slide valve according to Claim 8, **characterised in that** a sleeve-like moulding of the tappet unit, constructed for accommodating a tappet-side end of the first or the second compression spring section, has an axial depth, which is smaller than a spacing of the cover-side moulding from the tappet end.

10. The slide valve according to Claim 9, **characterised in that** a relaxed length of the first compression spring section, particularly a relaxed length of a compression spring realising the first compression spring section, is longer than an axial extent of the cover-side moulding.

11. The slide valve according to one of Claims 1 to 10, **characterised in that** the magnetically flux conductive valve housing (20) extends axially in as far as a travel region of the armature unit and, adjacently to the armature unit, constructs a conically tapering profile (22) as flux-conducting section (22).

## Revendications

1. Soupape à tiroir comprenant une unité de poussoir (24) allongée réalisée sous forme de tiroir de soupape et guidée dans un boîtier de soupape (20) présentant au moins une entrée de soupape (32) et au moins une sortie de soupape (34) prévue de manière décalée axialement par rapport à celle-ci, laquelle unité de poussoir coopère avec une unité d'induit déplaçable en réaction à une alimentation électrique d'une unité de bobine stationnaire (10) de telle sorte que l'unité de poussoir soit déplacée dans une direction axiale et à l'encontre de la force de rappel d'un accumulateur de force (40, 44) entre une position d'ouverture dans laquelle l'unité de poussoir libère un flux de fluide entre l'entrée de soupape et la sortie de soupape et une position de fermeture dans laquelle le flux de fluide est interrompu,
l'accumulateur de force présentant deux sections de ressort de compression (40, 44) accouplées axialement l'une à l'autre avec une première, respectivement une deuxième, force de ressort, lesquelles sont réalisées de telle sorte qu'une première section de ressort (40) soit comprimée avec la première force de ressort inférieure à la deuxième force de ressort par l'unité de poussoir (24) se déplaçant axialement de la position de fermeture dans la position d'ouverture,
la deuxième section de ressort (44), lorsque la première section de ressort est comprimée, étant seulement comprimée lorsque le flux de fluide est libéré une fois la position d'ouverture atteinte, et
les sections de ressort de compression sollicitant l'unité de poussoir axialement en deux étapes contre l'unité d'induit,
**caractérisée en ce**
**qu'**une étendue axiale d'un premier ressort de compression réalisant la première section de ressort est plus longue dans un état détendu qu'une étendue axiale d'un deuxième ressort de compression séparé réalisant la deuxième section de ressort dans l'état détendu.

2. Soupape à tiroir selon la revendication 1,
**caractérisée en ce que**
la première et la deuxième section de ressort de compression sont réalisées sous forme de succession et/ou de couches de ressorts de compression (40, 44) venant en prise axialement du côté frontal contre l'unité de poussoir.

3. Soupape à tiroir selon la revendication 1 ou 2,
**caractérisée en ce**
**qu'**une course de ressort et/ou de compression de la première section de ressort, en particulier d'un ressort de compression réalisant la première section de ressort, est dimensionnée de telle sorte qu'elle soit plus longue que le décalage axial entre l'entrée de soupape et la sortie de soupape.

4. Soupape à tiroir selon l'une quelconque des revendications 1 à 3,
**caractérisée en ce**
**qu'**une force de ressort et/ou une course de compression de la deuxième section de ressort, en particulier d'un ressort de compression réalisant la deuxième section de ressort, sont prévues de telle sorte qu'un fonctionnement de réglage en continu du flux de fluide puisse avoir lieu lors de l'obtention de la position d'ouverture.

5. Soupape à tiroir selon l'une quelconque des revendications 1 à 4,
**caractérisée en ce**
**qu'**une extrémité côté poussoir de la première ou de la deuxième section de ressort de compression est reçue dans une section d'extrémité de l'unité de poussoir (24) formée à la manière d'une douille.

6. Soupape à tiroir selon la revendication 5,
**caractérisée en ce**
**qu'**une unité de chariot et/ou de douille (42) réalisée pour effectuer une butée pour la section d'extrémité (36) formée à la manière d'une douille, guidée de manière glissant axialement dans le boîtier de soupape, constitue, conjointement avec la section d'extrémité (36), un logement pour un ressort de compression (40) réalisant la première section de ressort de compression.

7. Soupape à tiroir selon la revendication 6,
**caractérisée en ce que**
l'unité de chariot et/ou de douille est supportée par ressort au moyen d'un ressort de compression (44) réalisant la deuxième section de ressort de compression contre une butée (46) au niveau du boîtier de soupape.

8. Soupape à tiroir selon l'une quelconque des revendications 1 à 7,
**caractérisée en ce que**
l'unité de poussoir est guidée hermétiquement contre le boîtier de soupape du côté de l'enveloppe et présente du côté de l'enveloppe une formation (38) qui est réalisée et dimensionnée axialement de telle sorte que la formation provoque, dans la position d'ouverture, la libération du flux de fluide.

9. Soupape à tiroir selon la revendication 8,
**caractérisée en ce**
**qu'**une formation de type douille de l'unité de poussoir, réalisée pour recevoir une extrémité côté poussoir de la première ou de la deuxième section de ressort de compression, présente une profondeur axiale inférieure à une distance de la formation du côté de l'enveloppe à l'extrémité de poussoir.

10. Soupape à tiroir selon la revendication 9,
**caractérisée en ce**
**qu'**une longueur détendue de la première section de ressort de compression, en particulier une longueur détendue d'un ressort de compression réalisant la première section de ressort de compression, est plus longue qu'une étendue axiale de la formation du côté de l'enveloppe.

11. Soupape à tiroir selon l'une quelconque des revendications 1 à 10,
**caractérisée en ce que**
le boîtier de soupape (20) conduisant le flux magnétiquement s'étend axialement jusqu'à l'intérieur d'une région de course de l'unité d'induit, et, à côté de l'unité d'induit, constitue un profilage se terminant en forme de cône (22) en tant que section de guidage du flux (22).
